# EUROPÄISCHE PATENTSCHRIFT

(11) **EP 0 171 722 B1**
(45) Veröffentlichungstag und Bekanntmachung des Hinweises auf die Patenterteilung: **29.06.1994**
(21) Anmeldenummer: 85109748.5
(22) Anmeldetag: 02.08.1985
(51) Int. Cl.: B01J 13/00

(54) **Verfahren zur Herstellung von Aerogelen**
Process for obtaining aerogels
Procédé pour l'obtention d'aergels

(30) Priorität: 11.08.1984 DE 3429671
(43) Veröffentlichungstag der Anmeldung: 19.02.1986
(73) Patentinhaber: BASF Aktiengesellschaft, 67063 Ludwigshafen (DE)
(72) Erfinder: Graser, Fritz, Dr., D-6700 Ludwigshafen (DE); Stange, Andreas, Dr., D-6800 Mannheim 1 (DE)

(56) Entgegenhaltungen:
- EP-A- 0 067 741
- EP-A- 0 180 900
- US-A- 2 093 454
- US-A- 4 055 904
- MATERIALS LETTERS, Band 3, Nr. 9/10, Juli 1985, Seiten 363-367, Elsevier Science Publishers B.V., Amsterdam NL; P.H. TEWARI et al.: "Ambient-temperature supercritical drying of transparent silica aerogels"
- JOURNAL OF MATERIALS SCIENCE, Band 19, Nr. 5, Mai 1984, Seiten 1656-1665, Chapman and Hall Ltd, London, GB; M. PRASSAS et al.: "Synthesis of monolithic silica gels by hypercritical solvent evacuation"
- "Biol. Scanning Electron Microscopy" B.L. Gabriel, Van Norstrand Reingold Comp., New York, (1982), Seiten 96-107

## Beschreibung

Es ist bekannt, Hydrogele, die durch Hydrolyse von Silanen, Kieselsäureorthoestern oder Aluminiumverbindungen (vgl. Milan Symposium-Paper 9-Galley 1 bis 17; EP-A-18 955 und 67 741; US-PS 34 34 912, 22 49 767, 20 93 454 und DOS 27 58 415; S.P. Mukherjee, J. Zarzycki, J.P. Traverse, Journ. of Materials Science, 11 (1976), 341 bis 355) oder durch Ansäuern von Silikatlösungen und Neutralwaschen (vgl. US-PS 3 672 833) gewonnen wurden, aus methanolischer Phase überkritisch zu Aerogelen zu trocknen. Es ist weiterhin bekannt, anorganische Hydrogele auf der Basis von Magnesium, Chrom, Zinn und Thorium, sowie organische Hydrogele auf der Basis von Gelatine, Albumin und Agar-Agar aus Propan oder Diethyl- oder Dimethylether (US-PS 20 93 454) zu Aerogelen zu trocknen.

Außerdem ist aus der älteren europäischen Patentanmeldung EP-A-149 816 ein Verfahren zur Herstellung von anorganischen Aerogelen bekannt, bei dem die Gele direkt in wäßrig-organischer Phase hergestellt werden, anschließend mit weiterer flüssiger Phase bedeckt werden und nach Abdekantieren der flüssigen Phase aus überkritischem CO₂ getrocknet werden.

Schließlich ist in der US-PS 4 055 904 die Präparation von biorganischen Proben für die Elektronenmikroskopie durch Trocknung aus überkritischem CO₂ beschrieben.

Für die Trocknungsverfahren mit Methanol sind Temperaturen von mindestens 240°C und Drücke von mindestens 81 bar erforderlich. Für eine technische Durchführung sind derartige Bedingungen von Nachteil. Hinzu kommt noch, daß das Verfahrensprodukt nicht, wie bei Druckreaktionen üblich, durch Ventile ausgetragen werden kann, sondern erst nach der Entspannung aus dem Reaktionsgefäß entnommen werden kann. Hierzu muß nun die Druckapparatur von der hohen Verfahrenstemperatur auf eine zum Austragen geeignete Temperatur, d.h. auf deutlich unter 100°C, abgekühlt werden. Auch das Befüllen der Druckapparatur kann nur bei entsprechend niederen Temperaturen erfolgen. Das heißt aber, daß bei einer laufenden chargenweisen Trocknung immer wieder die gesamte Druckapparatur auf mindestens 240°C erhitzt und wieder abgekühlt werden muß. Dies erfordert einen hohen Aufwand an Energie und Zeit sowie erhöhte Ansprüche an das Apparatematerial. Auch bei Verwendung anderer organischer Flüssigkeiten mit niederem kritischen Punkt, wie Propan oder Dimethylether, sind Temperaturen von über 100°C erforderlich. Außerdem sind diese Flüssigkeiten feuergefährlich, weshalb für ein technisches Verfahren und eine laufende chargenweise Trocknung besondere Vorsichtsmaßnahmen und Sicherheitsmaßnahmen erforderlich sind.

Aufgabe der vorliegenden Erfindung war es, ein schonenderes Trockenverfahren für anorganische Hydrogele bereitzustellen, das die Nachteile der bekannten Trockenverfahren nicht aufweist und technisch gut durchführbar ist.

Demgemäß wurde ein Verfahren zur Herstellung von anorganischen Aerogelen durch Trocknung von anorganischen Hydrogelen, wobei das in den Hydrogelen enthaltene Wasser durch ein mit Wasser mischbares organisches Medium ausgetauscht wird, gefunden, welches dadurch gekennzeichnet ist, daß man das Wasser unter Druck durch das mit Wasser mischbare organische Medium austauscht, dann das organische Medium durch flüssiges oder überkritisches CO₂ austauscht, bis das Gel praktisch frei von dem organischen Medium ist, und anschließend aus dem CO₂ enthaltenden Gel das CO₂ im überkritischen Zustand durch Entspannen entfernt und so das Gel trocknet.

Die Trocknung nach dem erfindungsgemäßen Verfahren ist technisch viel besser durchführbar, da das Befüllen und Leeren der Druckapparatur einschließlich des Trockenvorgangs bei gut handhabbarer Temperatur erfolgt und das CO₂ nicht feuergefährlich ist.

Als Hydrogele kommen anorganische Hydrogele, die nach bekannten Verfahren durch Hydrolyse von löslichen metallorganischen Verbindungen, Oxiden, Hydroxiden und/oder leicht hydrolysierbaren Salzen der Elemente Aluminium, Silicium, Titan, Bor, Lanthan, Zirkon, Chrom, Zinn, Thorium, Magnesium oder deren Gemischen erhalten werden, in Betracht. Besonders bevorzugt sind Kieselsäurehydrogele, die nach bekannten Verfahren aus Silanen, Kieselsäureorthoestern, insbesondere Alkalisilikaten erhältlich sind. Die Gele können in beliebiger räumlicher Form vorliegen, so z.B. in unregelmäßigen Stücken, in Würfeln, Platten oder Quadern, vorzugsweise aber in Kugelform bzw. sphärischen Partikeln. Falls diese Gele nicht schon wasserfrei in einem organischen Medium als Lyogele, sondern in wäßrigem Medium als Hydrogele vorliegen, wird man des wäßrige Medium unter Druck durch ein mit Wasser mischbares organisches Medium, z.B. durch mit Wasser mischbare Ketone oder Alkohole, wie Aceton, Ethanol, n- oder iso-Propanol oder vorzugsweise Methanol austauschen, z.B. in einer Durchfluß-Druckapparatur. Dies kann bei Temperaturen zwischen Raumtemperatur und höherer Temperatur, z.B. bis 100°C , geschehen. Der Austausch wird solange durchgeführt, bis der Wassergehalt der organischen Phase unterhalb von 0,2 %, vorzugsweise unterhalb von 0,1 % liegt. Anschließend wird in einer Durchfluß-Druckapparatur die organische Phase durch CO₂ ausgetauscht. Dies geschieht vorzugsweise mit flüssigem CO₂. Man kann hierbei bei Normaltemperatur (20 bis 30°C) und Drücken von oberhalb 70 bar arbeiten, vorzugsweise bei 80 bis 120 bar. Man kann aber auch mit überkritischem CO₂, d.h. bei Drücken von 80 bis 120 bar und einer Temperatur, die oberhalb der kritischen Temperatur von CO₂ liegt. z.B. von 35 bis 80°C, die organische Phase verdrängen. Wenn die organische Phase vollständig verdrängt ist, wird durch Entspannen der Durchfluß-Apparatur das CO₂ entfernt. Das Entspannen erfolgt adiabatisch oder vorzugsweise isotherm. Dabei ist es zweckmäßig, wenn das Entspannen nicht auf einmal und plötzlich durchgeführt wird, sondern durch schwaches Öffnen des Ventils allmählich erfolgt, was etwa je nach Druck und Menge zwischen 10 und 120 Minuten dauert. Durch zu schnellen Druckabfall im Druckgefäß könnte die feine Struktur des Aerogels zerstört werden. Das Entspannen erfolgt bei überkritischer Temperatur des CO₂, z.B. bei 73 bis 120 bar, vorzugsweise 80 bis 120 bar und im Temperaturbereich zwischen 40 und 90°C. Man wird die Temperatur jedoch nicht zu hoch wählen, damit das Gefäß ohne vorheriges Kühlen entleert werden kann. Dies kann durch Ausgießen, Austragen oder Aussaugen geschehen, wenn, wie erwähnt, vorzugsweise das Hydrogel in Kugelform verwendet worden ist.

Damit bei der adiabatischen Entspannung die Produkt- und Apparatetemperatur nicht zu tief sinkt, wird zweckmäßigerweise vor dem Entspannen die Temperatur entsprechend etwas höher eingestellt.

Unter den angegebenen Arbeitsbedingungen findet eine besonders schonende Trocknung der Gele statt. Oft ist es zweckmäßig, nach dem Trocknen aus CO₂ restliche Spuren von dem Lösungsmittel, die noch am Aerogel haften können, durch eine Nachbehandlung zu entfernen. Dies kann durch Tempern bei Temperaturen von bis zu 600°C oder durch Behandeln mit einem inerten Gasstrom wie Stickstoff, CO₂ oder Luft bei 30 bis 100°C, vorzugsweise bei 50 bis 90°C erfolgen. Die Dauer der Behandlung bzw. des Temperns liegt im allgemeinen bei 0,2 bis 5, vorzugsweise bei 0,5 bis 3 Stunden.

Nach dem erfindungsgemäßen Verfahren erhält man z.B. Siliciumdioxid-Aerogele, die transparent sind (Transmission 60 bis 95 %, je nach Ausgangsmaterial), ein sehr niederes Schuttgewicht von etwa 100 bis 200 g pro Liter und eine niedere Dichte haben. Die spezifische Oberfläche (BET-Wert) liegt bei 90 bis 1000 m²/g und hängt vom verwendeten Hydrogel (Ausgangsmaterial) ab. Sie haben ein sehr geringes Wärmeleitvermögen (0,015 bis 0,025 W/m.K) und eignen sich deshalb sehr gut als Isoliermaterial. Wegen des hohen Porenvolumens lassen sie sich auch sehr gut als Füllung für Kolonnen für die hochwirksame Flüssigkeitschromatographie verwenden.

Die anorganischen Aerogele können auch als Füllstoff in der Kunststoffindustrie, als Katalysatorträger, als Träger für Enzyme und als Adsorbentien bei Sorptionsprozessen, unter Einschluß des Auffangens und Entfernens von giftigen Stoffen aus tierischen Geweben und ähnl. Anwendung finden.

Die folgenden Beispiele sollen die Erfindung weiter erläutern. Die im folgenden genannten Teile und Prozentangaben beziehen sich auf das Gewicht. Die Volumenteile verhalten sich zu den Gewichtsteilen wie das Liter zum Kilogramm.

### Beispiel 1

1400 Teile wasserfeuchtes Hydrogel (hergestellt nach Beispiel 1 der DE-OS 21 03 243, wobei die gewünschte Fraktion durch Sieben abgetrennt wurde), das in etwa 3 bis 6 mm großen Kugeln vorliegt, werden bei 25°C in einen 2500 Vol.-Teile enthaltenden Druckbehälter gegeben. Der Druckbehälter wird verschlossen und vollständig mit Methanol aufgefüllt. Bei Raumtemperatur und 5 bar Druck wird solange Methanol - gegen Ende wasserfreies Methanol -durch den Druckbehälter gepumpt, bis der Wassergehalt des abfließenden Methanols unter 0.1 % liegt. Das Lyogel liegt dann praktisch wasserfrei in methanolischer Phase vor. Hierzu werden 11300 Teile Methanol benötigt, die nach dem Entwässern und Aufarbeiten wiederverwendet werden können. Für den Lösungsmittelaustausch Wasser gegen Methanol sind etwa 7 Stunden erforderlich. Anschließend wird bei Normaltemperautr und etwa 90 bar flüssiges CO₂ durch den Druckbehälter gepreßt und dadurch die methanolische Phase durch flüssiges CO₂ ausgetauscht. Dies erfordert etwa 2 Stunden und 6500 Teile CO₂.

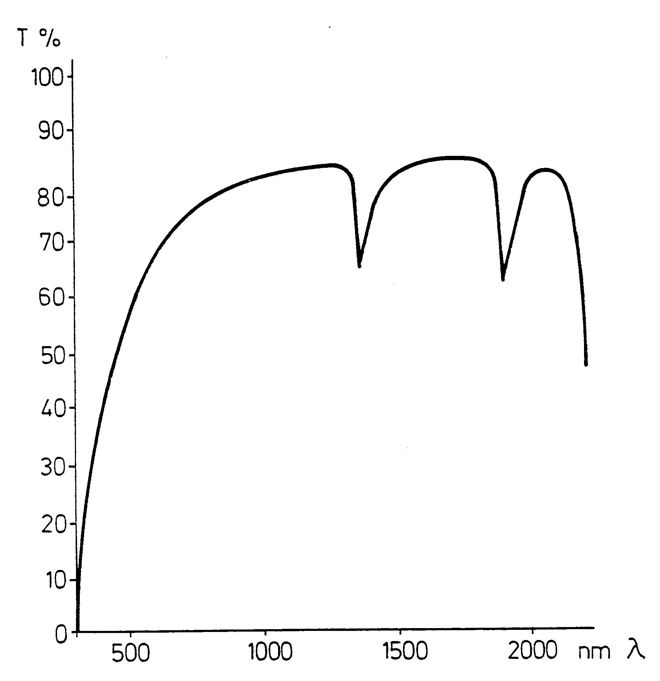

Das CO₂ kann in geeigneten Apparaten aufgefangen und nach Abtrennung des Methanols wiederverwendet werden. Der Druckbehälter wird dann unter Begrenzung des Drucks auf 90 bar auf 60°C erwärmt. Das CO₂ geht in den überkritischen Zustand über und wird anschließend während 45 Minuten isotherm entspannt. Unmittelbar darauf wird der Druckbehälter entleert. Man erhält 266 Teile eines transparenten Aerogels in Kugelform mit ca. 3 bis 6 mm Durchmesser. Das erhaltene Aerogel hat folgende Eigenschaften: Dichte: 140 g/l; spezifische Oberfläche (bestimmt durch N₂-Adsorption); 382 m²/g; Transmission: 60 bis 80 % (vgl. Fig. 1, Transmissionskurve), Wärmeleitfähigkeit: 0,02 W/m.K.

Wird dieses Aerogel gegebenenfalls anschließend noch einer Wärmebehandlung unterzogen, z.B. 7-stündiges Erwärmen auf 600°C, so erhöht sich die Wärmeleitfähigkeit nur minimal auf 0,022 W/m·K.

Führt man den Lösungsmittelaustausch Wasser gegen Methanol statt bei 5 bar, bei 60 bar und den Austausch des Methanols gegen CO₂ bei 120 bar durch, wobei man im überkritischen Zustand den Druck auch auf 120 bar begrenzt, so erhält man ein Aerogel mit den gleichen Eigenschsften.

Verwendet man wasserfeuchte Hydrogele in Kugelform mit einem Durchmesser von 8 bis 10 mm statt von ca. 3 bis 6 mm, so erhält man ein ganz ähnliches Aerogel, jedoch mit entsprechend größerem Durchmesser.

### Beispiel 2

420 Teile wasserfeuchtes Hydrogel (wie in Beispiel 1) werden bei 25°C in ein senkrecht stehendes Hochdruckrohr (Inhalt 700 Volumenteile am unteren Ende mit einer Stahlfritte versehen) eingefüllt. Nach dem Verschließen wird das Rohr vollständig mit Methanol gefüllt und der Inhalt auf 60 bis 65°C erwärmt, wobei der Druck über ein Ausgangsventil am Rohrkopf auf 50 bis 60 bar begrenzt wird. Bei einer Temperatur von 60 bis 65°C und einem Druck von 50 bis 60 bar wird durch ein Ventil am unteren Ende des Druckrohrs wasserfreies Methanol durchgepumpt, bis der Wassergehalt des abfließenden Methanols unter 0,1 % liegt. Dies ist nach dem Durchsatz von 4400 Teilen Methanol der Fall, Dauer 4,5 Stunden. Anschließend wird bei 60 bis 65°C und einem Druck von 120 bar mit CO₂, das unter diesen Bedingungen im überkritischen Zustand vorliegt, das Methanol gegen CO₂ ausgetauscht. Hierzu sind 1950 Teile CO₂ erforderlich; Dauer 60 Minuten. Unmittelbar danach wird während 15 Minuten isotherm entspannt. Nach dem Entleeren des Rohrs erhält man 74 Teile eines kugelförmigen Aerogels, das die gleichen Eigenschaften besitzt wie das nach Beispiel 1 erhaltene.

Werden mehrere Chargen hintereinander gefahren, so wird nach dem Entleeren bei 60 bis 65°C bei der gleichen Temperatur das Druckrohr wieder mit dem wasserfeuchten Hydrogel gefüllt und wie beschrieben weiterverfahren. Eine Änderung der Apparatetemperatur, wie Kühlen und Aufheizen, ist nicht erforderlich.

### Beispiel 3

Man verfährt wie in Beispiel 1, verwendet jedoch anstelle des kugelformigen Hydrogels ein Hydrogel in Form von unregelmäßig geformten Stücken von jeweils 1 bis 3 cm³. Man erhält ein unregelmäßig geformtes Aerogel, das ähnliche Eigenschaften wie das nach Beispiel 1 erhaltene aufweist.

Das Hydrogel wurde nach EP-A- 18 955, Spalte 4, Zeilen 47 bis 61 aus Kieselsäureorthomethylester durch Hydrolyse hergestellt.

### Beispiel 4

63 Teile wasserfeuchtes Hydrogel in Form von 3 bis 6 mm großen Kugeln (hergestellt nach Beispiel 1 der DE-OS 21 03 243 aus Natriumwasserglas, bei dem die gewünschte Fraktion durch Sieben abgetrennt wurde) werden bei Raumtemperatur in einem Druckbehälter (Volumen 120 Vol.-Teile, Durchmesser: Höhe = 1:2), der oberhalb des Bodenventils mit einer Siebplatte versehen ist, eingefüllt. Der verschlossene Behälter wurde mit Methanol vollständig aufgefüllt. Bei 20 bis 25°C und einem Druck von 0,5 bis 1 bar wird Methanol, zuletzt wasserfreies Methanol durch den Behälter gepumpt, bis der Wassergehalt des abfließenden Methanols unterhalb 0,1 % Wasser liegt. Hierzu werden 640 Teile Methanol benötigt. Dauer: 5 Std. Das Gel liegt dann praktisch wasserfrei in methanolischer Phase als Lyogel vor.

Anschließend wird bei Normaltemperatur (20 bis 25°C) und 80 bar flüssiges CO₂ durch den Behälter gedrückt und die methanolische Phase durch flüssiges CO₂ ausgetauscht. Nach 2,5 Std. läßt sich im abgehenden und entspannten CO₂ kein Methanol mehr kondensieren. Um das Methanol aus den Poren des Gels möglichst weitgehend zu entfernen, wird durch das Gel noch weitere 3,5 Stunden CO₂ geleitet. Es werden 650 Teile CO₂ benötigt. Anschließend wird der Druckbehälter unter Begrenzung des Druckes auf 80 bar auf 60°C erwärmt. Das CO₂ geht dabei in den überkritischen Zustand über und wird während 1,5 Stunden bei 60 bis 65°C isotherm entspannt. Danach werden unter 5 bar 70.000 Volumenteile (Normalbedingungen) Stickstoff von 80 bis 85°C durch den Behälter geleitet. Dann wird der Behälter entleert. Ausbeute: 10 Teile Aerogel in Form von 3 bis 6 mm großen Kugeln.

Das erhaltene Aerogel hat praktisch die gleichen Eigenschaften wie das nach Beispiel 1 erhaltene.

Verdrängt man das Methanol nur mit 500 Teilen flüssigem CO₂, Dauer insgesamt 4 Std., statt mit 650 Teilen während 6 Std., dann erhält man ein ganz ähnliches Aerogel.

## Patentansprüche

1. Verfahren zur Herstellung von anorganischen Aerogelen durch Trocknung von anorganischen Hydrogelen, wobei das in den Hydrogelen enthaltene Wasser durch ein mit Wasser mischbares organisches Medium ausgetauscht wird, dadurch gekennzeichnet, daß man das Wasser unter Druck durch das mit Wasser mischbare organische Medium austauscht, dann das organische Medium durch flüssiges oder überkritisches CO₂ austauscht, bis das Gel praktisch frei von dem organischen Medium ist, und anschließend aus dem CO₂ enthaltenden Gel das CO₂ im überkritischen Zustand durch Entspannen entfernt und so das Gel trocknet.

2. Verfahren gemäß Anspruch 1, dadurch gekennzeichnet, daß man anorganische Hydrogele verwendet, die durch Hydrolyse von löslichen metallorganischen Verbindungen, Oxiden, Hydroxiden und/oder leicht hydrolsierbaren Salzen der Elemente Aluminium, Silicium, Titan, Bor, Lanthan, Zircon, Chrom, Zinn, Thorium, Magnesium oder deren Gemischen erhalten werden.

3. Verfahren gemäß Anspruch 1, dadurch gekennzeichnet, daß man als Hydrogel ein Kieselsäurehydrogel verwendet.

4. Verfahren gemäß Anspruch 3, dadurch gekennzeichnet, daß man Hydrogele verwendet, die aus Alkalisilikaten hergestellt worden sind.

5. Verfahren gemiß Anspruch 1, 2, 3 oder 4, dadurch gekennzeichnet, daß man als organisches mit Wasser mischbares Medium mit Wasser mischbare Ketone oder Alkohole verwendet.

6. Verfahren gemäß Anspruch 5, dadurch gekennzeichnet, daß man als organisches Medium Methanol, Ethanol, n-Propanol, i-Propanol oder Aceton verwendet.

7. Verfahren gemäß Anspruch 5, dadurch gekennzeichnet, daß man als organisches Medium Methanol verwendet.

## Claims

1. A process for the preparation of an inorganic aerogel by drying an inorganic hydrogel, the water present in the hydrogel being exchanged for a water-miscible organic medium, wherein the water is exchanged under pressure for the water-miscible organic medium, the organic medium is then exchanged for liquid or supercritical CO₂ until the gel is virtually free of the organic medium, and the CO₂ in the supercritical state is then removed from the CO₂-containing gel by letting down the pressure and the gel is thus dried.

2. A process as claimed in claim 1, wherein an inorganic hydrogel which is obtained by hydrolysis of soluble organometallic compounds, oxides, hydroxides or readily hydrolyzable salts of the elements aluminum, silicon, titanium, boron, lanthanum, zirconium, chromium, tin, thorium or magnesium, or a mixture thereof, is used.

3. A process as claimed in claim 1, wherein the hydrogel used is a silica hydrogel.

4. A process as claimed in claim 3, wherein a hydrogel which has been prepared from an alkali metal silicate is used.

5. A process as claimed in claim 1, 2, 3 or 4, wherein a water-miscible ketone or alcohol is used as the organic water-miscible medium.

6. A process as claimed in claim 5, wherein methanol, ethanol, n-propanol, isopropanol or acetone is used as the organic medium.

7. A process as claimed in claim 5, wherein methanol is used as the organic medium.

## Revendications

1. Procédé de préparation d'aérogels inorganiques par le séchage d'hydrogels inorganiques, conformément auquel l'eau contenue dans les hydrogels est échangée contre un milieu organique miscible à l'eau, caractérisé en ce que l'on échange l'eau sous pression par le milieu organique miscible à l'eau, puis on échange le milieu organique par du CO₂ liquide ou supercritique, jusqu'à ce que le gel soit pratiquement dépourvu du milieu organique et on élimine ensuite le CO₂ à l'état supercritique du gel contenant le CO₂ par l'intermédiaire d'une détente et on sèche ainsi le gel.

2. Procédé suivant la revendication 1, caractérisé en ce que l'on utilise des hydrogels inorganiques que l'on a obtenus par l'hydrolyse de composés organométalliques solubles, d'oxydes, d'hydroxydes et/ou de sels facilement hydrolysables des éléments aluminium, silicium, titane, bore, lanthane, zirconium, chrome, étain, thorium, magnésium, ou leurs mélanges.

3. Procédé suivant la revendication 1, caractérisé en ce que l'on utilise un hydrogel d'acide silicique à titre d'hydrogel.

4. Procédé suivant la revendication 3, caractérisé en ce que l'on utilise des hydrogels qui ont été préparés à partir de silicates d'alcalis.

5. Procédé suivant la revendication 1, 2, 3 ou 4, caractérisé en ce que l'on utilise des cétones ou des alcools qui sont miscibles à l'eau à titre de milieu organique et miscible à l'eau.

6. Procédé suivant la revendication 5, caractérisé en ce que l'on utilise le méthanol, l'éthanol, le n-propanol, le i-propanol ou l'acétone à titre de milieu organique.

7. Procédé suivant la revendication 5, caractérisé en ce que l'on utilise le méthanol à titre de milieu organique.
